# EUROPÄISCHE PATENTSCHRIFT

(11) **EP 1 686 362 B1**
(45) Veröffentlichungstag und Bekanntmachung des Hinweises auf die Patenterteilung: **11.02.2009**
(21) Anmeldenummer: 05112467.5
(22) Anmeldetag: 20.12.2005
(51) Int. Cl.: G01L 9/00

(54) **Drucksensor**
Pressure sensor
Capteur de pression

(30) Priorität: 01.02.2005 DE 102005004603
(43) Veröffentlichungstag der Anmeldung: 02.08.2006
(73) Patentinhaber: Continental Automotive GmbH, 30165 Hannover (DE)
(72) Erfinder: Mattmann, Erich, 55262 Heidesheim (DE); Weber, Klaus, 61476 Kronberg (DE)

(56) Entgegenhaltungen:
- EP-A- 0 911 623
- EP-A- 1 464 941
- EP-A2- 0 561 397
- WO-A-20/06072391
- US-A- 4 586 018
- US-A1- 2003 062 982

## Beschreibung

Die Erfindung bezieht sich auf einen Kraftsensor, insbesondere Drucksensor, mit einem membranartigen Träger aus Keramik, auf dem dehnungsempfindliche Dickschichtwiderstände und eine Schaltung von Dickschichtleiterbahnen angeordnet sind, die insbesondere als die Dickschichtwiderstände miteinander verbindende Wheatstone-Brücke ausgebildet sind, wobei zwischen dem Träger und den Dickschichtwiderständen eine Dielektrikumschicht angeordnet ist.

Bei einem solchen Kraftsensor ist es bekannt, dass die Dickschichtwiderstände und die Dickschichtleiterbahnen mittels Siebdruck auf den Träger aus Keramik aufgeduckt werden und anschließend einen Sinterprozess durchlaufen. Im Anschluss daran können auf die Dickschichtleiterbahnen diskrete Bauteile wie Kondensatoren, IC's oder Transistoren aufgelötet oder mittels Silberleitkleber kontaktiert werden.

Für die Messung von Drücken werden u. a. in der Anwendung im Automobilbereich vermehrt resistive Drucksensoren eingesetzt. Die dehnungsempfindlichen Dickschichtwiderstände verändern als Wheatston-Brücke miteinander verschaltet unter mechanischer Biegung des membranartigen Trägers das anliegende Offsetsignal. Dafür verantwortlich ist der so genannte k-Faktor oder Gauge-Faktor dieser Dickschichtwiderstände, der ein materialspezifischer Verstärkungsfaktor ist.

Sollen niedrige Drücke mit dem Kraftsensor gemessen werden, sind nur kleine Ausgangssignale von einigen Millivolt erhältlich, die durch eine nachgeschaltete Elektronik nur schlecht verarbeitet werden können.

Aus der WO 2006/072391 A ist ein Kraftsensor bekannt, der ein plattenförmiges Substrat aus Glaskeramik aufweist, auf dem dehnungsempfindliche Dickschichtwiderstände und eine Schaltung von Dickschichtleiterbahnen angeordnet sind, die als die Dickschichtwiderstände miteinander verbindende Wheatstone-Brücke ausgebildet sind. Das Substrat ist durch eine Verbindungsschicht auf einem Träger aus Keramik angeordnet.

Aus der EP-A2-0 561 397 ist ein Drucksensor bekannt, der einen membranartigen Träger aus Metall aufweist, auf dem eine Glasschicht vorgesehen ist, die wiederum ein Widerstandselement trägt, dessen Widerstand sich in Abhängigkeit von seinem Verformungsgrad ändert und der mit Elektroden verbunden ist.

Aufgabe der Erfindung ist es daher einen Kraftsensor der eingangs genannten Art zu schaffen, der durch eine nachgeschaltete Elektronik gut verarbeitbare Signale erzeugt.

Diese Aufgabe wird erfindungsgemäß dadurch gelöst, dass an den aneinander angrenzenden Bereichen von Dickschichtwiderständen und Dielektrikumschicht eine Mischphase der Werkstoffe von Dickschichtwiderständen und Dielektrikumschicht gebildet ist.

Durch die Mischphase der Werkstoffe von Dickschichtwiderständen und Dielektrikumschicht kann eine Erhöhung des k-Faktors um etwa 100 % erreicht werden.

Weiterhin kann auch zwischen dem Träger und den Dickschichtleiterbahnen eine Dielektrikumschicht angeordnet sein.

Durch diese Ausbildung kommt es zu einer erheblichen Erhöhung des k-Faktors und damit auch zu einer wesentlich verbesserten Verarbeitbarkeit der Signale der von dem Kraftsensor erzeugten Signale durch eine nachgeschaltete Elektronik.

Weiterhin kann auf eine sehr dünne Ausbildung der membranartigen Träger verzichtet werden, was deren Herstellbarkeit vereinfacht und verbilligt.

Zur Befestigung auf dem Träger kann die Dielektrikumschicht als Dickschicht auf den Träger aufgesintert sein.

Vorzugsweise ist dabei die Dielektrikumschicht eine Glasschicht.

Gleichermaßen einfach können die Dickschichtleiterbahnen auf die Dielektrikumschicht aufgesintert sein.

Die Dickschichtwiderstände können auf die Dielektrikumschicht aufgesintert sein.

Ein Verfahren zum Aufbringen der Schichten besteht darin, dass die Dielektrikumschicht und/oder die Dickschichtwiderstände und/oder die Dickschichtleiterbahnen nach deren Aufdrucken als Dickschichtpasten separat gesintert sind.

In einem anderen Verfahren sind die Dielektrikumschicht und die Dickschichtwiderstände und die Leiterbahnen zunächst alle als Dickschichtpasten aufgedruckt und anschließend gemeinsam gesintert.

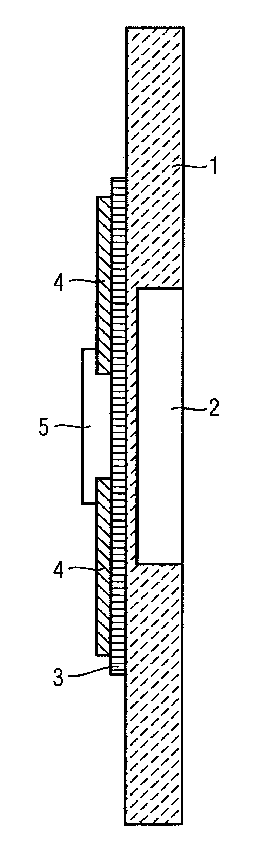

Ein Ausführungsbeispiel der Erfindung ist in der Zeichnung dargestellt und wird im Folgenden näher beschrieben. Die einzige Figur der Zeichnung zeigt eine Querschnittsansicht eines Drucksensors.

Der dargestellte Drucksensor besitzt einen plattenartigen Träger 1 aus Keramik, der einen mittleren Bereich mit einer topfartigen Ausnehmung 2 besitzt, in dem der Träger 1 eine wesentlich geringere Dicke besitzt und membranartig ausgebildet ist.

Der Bereich des Trägers 1 außerhalb der Ausnehmung 2 ist starr, während der membranartige Bereich durch Beaufschlagung mit einem zu messenden Druck auslenkbar ist.

Auf die der Ausnehmung 2 gegenüberliegende Seite des Trägers 1 ist in Dickschichttechnik Glaspaste im Siebdruckverfahren aufgedruckt, die nach einem Sintervorgang eine Dielektrikumschicht 3 bildet.

Ebenfalls im Siebdruckverfahren sind aus Leiterpaste auf die Dielektrikumschicht 3 Leiterbahnschichten aufgedruckt, die durch einen Sintervorgang Dickschichtleiterbahnen 4 und 4' werden und zwischen sich eine Lücke bilden.

Im Bereich der Lücke ist auf die Dielektrikumschicht 3 Widerstandspaste im Siebdruckverfahren aufgebracht, die zur Kontaktsicherheit mit ihren Randbereichen die Leiterbahnschichten an deren freien Enden überlappt und nach einem Sintervorgang einen Dickschichtwiderstand 5 bildet.

Nach dem Aufbringen von Glaspaste, Leiterbahnschichten sowie Widerstandspaste werden diese in einem Sinterprozess gesintert.

Die Dickschichtleiterbahnen 4 und 4' bilden zusammen mit weiteren gleichartigen Dickschichtleiterbahnen und weiteren gleichartigen Dickschichtwiderständen 5 eine Wheatstone-Brücke, die bei Auslenkung des Membranbereichs des Trägers 1 ein Ausgangssignal erzeugt, das dem den Membranbereich beaufschlagenden und zu messenden Druck proportional ist. Dieses Ausgangssignal wird einer Elektronik zur Verarbeitung zugeleitet.

## Patentansprüche

1. Kraftsensor, insbesondere Drucksensor, mit einem membranartigen Träger aus Keramik, auf dem dehnungsempfindliche Dickschichtwiderstände und eine Schaltung von Dickschichtleiterbahnen angeordnet sind, die insbesondere als die Dickschichtwiderstände miteinander verbindende Wheatstone-Brücke ausgebildet sind, wobei zwischen dem Träger und den Dickschichtwiderständen eine Dielektrikumschicht angeordnet ist, **dadurch gekennzeichnet, dass** an den aneinander angrenzenden Bereichen von Dickschichtwiderständen (5) und Dielektrikumschicht (3) eine Mischphase der Werkstoffe von Dickschichtwiderständen (5) und Dielektrikumschicht (3) gebildet ist.

2. Kraftsensor nach Anspruch 1, **dadurch gekennzeichnet, dass** zwischen dem Träger (1) und den Dickschichtleiterbahnen (4, 4') eine Dielektrikumschicht (3) angeordnet ist.

3. Kraftsensor nach einem der vorhergehenden Ansprüche, **dadurch gekennzeichnet, dass** die Dielektrikumschicht (3) als Dickschicht auf den Träger (1) aufgesintert ist.

4. Kraftsensor nach Anspruch 3, **dadurch gekennzeichnet, dass** die Dielektrikumschicht (3) eine Glasschicht ist.

5. Kraftsensor nach einem der vorhergehenden Ansprüche, **dadurch gekennzeichnet, dass** die Dickschichtleiterbahnen (4, 4') auf die Dielektrikumschicht (3) aufgesintert sind.

6. Kraftsensor nach einem der vorhergehenden Ansprüche, **dadurch gekennzeichnet, dass** die Dickschichtwiderstände (5) auf die Dielektrikumschicht (3) aufgesintert sind.

7. Verfahren zur Herstellung eines Kraftsensors nach einem der vorhergehenden Ansprüche, **dadurch gekennzeichnet, dass** die Dielektrikumschicht und/oder die Dickschichtwiderstände und/ oder die Dickschichtleiterbahnen nach deren Aufdrucken als Dickschichtpasten separat gesintert sind.

8. Verfahren zur Herstellung eines Kraftsensors nach einem der Ansprüche 1 bis 7, **dadurch gekennzeichnet, dass** die Dielektrikumschicht (3) und die Dickschichtwiderstände (5) und die Leiterbahnen (4, 4') zunächst alle als Dickschichtpasten aufgedruckt und anschließend gemeinsam gesintert sind.

## Claims

1. Force sensor, in particular a pressure sensor, having a diaphragm-like carrier made of ceramic, on which are arranged strain-sensitive thick-film resistors and a circuit of thick-film conductor tracks, which are formed in particular as a Wheatstone bridge connecting the thick-film resistors to one another, a dielectric layer being arranged between the carrier and the thick-film resistors, **characterized in that** a mixed phase of the materials of thick-film resistors (5) and dielectric layer (3) is formed at the mutually adjoining regions of thick-film resistors (5) and dielectric layer (3).

2. Force sensor according to Claim 1, **characterized in that** a dielectric layer (3) is arranged between the carrier (1) and the thick-film conductor tracks (4, 4').

3. Force sensor according to one of the preceding claims, **characterized in that** the dielectric layer (3) is sintered as a thick film onto the carrier (1).

4. Force sensor according to Claim 3, **characterized in that** the dielectric layer (3) is a glass layer.

5. Force sensor according to one of the preceding claims, **characterized in that** the thick-film conductor tracks (4, 4') are sintered onto the dielectric layer (3).

6. Force sensor according to one of the preceding claims, **characterized in that** the thick-film resistors (5) are sintered onto the dielectric layer (3).

7. Method for producing a force sensor according to one of the preceding claims, **characterized in that** the dielectric layer and/or the thick-film resistors and/or the thick-film conductor tracks are sintered separately after the printing on thereof as thick-film pastes.

8. Method for producing a force sensor according to one of Claims 1 to 7, **characterized in that** the dielectric layer (3) and the thick-film resistors (5) and the conductor tracks (4, 4') are firstly all printed on as thick-film pastes and subsequently sintered jointly.

## Revendications

1. Détecteur de force, notamment détecteur de pression, comportant un support en céramique du type à membrane sur lequel sont disposées des résistances sur couche épaisse sensibles à la dilatation et un montage électrique de pistes conductives sur couche épaisse, lesquelles sont notamment conçues en tant que pont de Wheatstone reliant entre elles les résistances sur couche épaisse, où, entre le support et les résistances sur couche épaisse, est placée une couche de diélectrique, **caractérisé par le fait qu'**une phase mixte des matières premières formant les résistances en couche épaisse (5) et la couche de diélectrique (3) se forme au niveau des zones adjacentes les unes aux autres des résistances en couche épaisse (5) et de la couche de diélectrique (3).

2. Détecteur de force selon la revendication 1, **caractérisé par le fait qu'**une couche de diélectrique (3) est placée entre le support (1) et les pistes conductives sur couche épaisse (4, 4').

3. Détecteur de force selon l'une des revendications précédentes, **caractérisé par le fait que** la couche de diélectrique (3) est agglomérée par frittage sous forme de couche épaisse sur le support (1).

4. Détecteur de force selon la revendication 3, **caractérisé par le fait que** la couche de diélectrique (3) est une couche de verre.

5. Détecteur de force selon l'une des revendications précédentes, **caractérisé par le fait que** les pistes conductives sur couche épaisse (4, 4') sont agglomérées par frittage sur la couche de diélectrique (3).

6. Détecteur de force selon l'une des revendications précédentes, **caractérisé par le fait que** les résistances sur couche épaisse (5) sont agglomérées par frittage sur la couche de diélectrique (3).

7. Procédé permettant de fabriquer un détecteur de force conforme à l'une des revendications précédentes, **caractérisé par le fait que** la couche de diélectrique et /ou les résistances sur couche épaisse et/ou les pistes conductives sur couche épaisse sont, après leur application sous forme de pâtes sur couche épaisse, agglomérées séparément par frittage.

8. Procédé permettant de fabriquer un détecteur de force conforme à l'une des revendications 1 à 7, **caractérisé par le fait que** la couche de diélectrique (3) et les résistances sur couche épaisse (5) et les pistes conductives (4, 4') sont d'abord toutes appliquées sous forme de pâtes sur couche épaisse et sont ensuite agglomérées en commun par frittage.
